# EUROPÄISCHE PATENTSCHRIFT

(11) **EP 1 727 647 B1**
(45) Veröffentlichungstag und Bekanntmachung des Hinweises auf die Patenterteilung: **26.12.2007**
(21) Anmeldenummer: 05734043.2
(22) Anmeldetag: 18.03.2005
(51) Int. Cl.: B23Q 16/00, B23Q 3/18, F16B 19/02

(54) **ZENTRIERSTIFT**
CENTERING PIN
TIGE DE CENTRAGE

(30) Priorität: 24.03.2004 DE 202004004744 U
(43) Veröffentlichungstag der Anmeldung: 06.12.2006
(73) Patentinhaber: Friatec Aktiengesellschaft, 68229 Mannheim (DE)
(72) Erfinder: SCHRAMM, Peter, 95119 Naila (DE)
(74) Vertreter: Schmitt, Meinrad
(86) Internationale Anmeldenummer: PCT/EP2005/002924
(87) Internationale Veröffentlichungsnummer: WO 2005/092567

(56) Entgegenhaltungen:
- WO-A-20/04069468
- DE-A1- 10 222 008
- PATENT ABSTRACTS OF JAPAN Bd. 2000, Nr. 01, 31. Januar 2000 (2000-01-31) & JP 11 280721 A (NGK INSULATORS LTD), 15. Oktober 1999 (1999-10-15)
- PATENT ABSTRACTS OF JAPAN Bd. 015, Nr. 061 (M-1081), 13. Februar 1991 (1991-02-13) & JP 02 290696 A (DENKI KAGAKU KOGYO KK), 30. November 1990 (1990-11-30) in der Anmeldung erwähnt

## Beschreibung

Die Erfindung bezieht sich auf ein Aufnahmeelement gemäß den im Oberbegriff des Patentanspruchs 1 angegebenen Merkmalen.

Aus der JP 11 280 721 A ist ein derartiges Aufnahmeelement mit einem Bolzen aus Keramik und einer Spitze aus Metall bekannt, wobei die Spitze einen Endteil aufweist, welcher in eine als Durchgangsbohrung ausgebildete Ausnehmung des Bolzens eingreift und durchgeführt ist. Das Aufnahmeelement enthält ferner einen Flanschteil mit einer Durchgangsbohrung, in welche der genannte Endteil gleichfalls eingreift und in welcher der Endteil mittels einer Gewindeverbindung mit dem Flanschteil verbunden ist. Der Flanschteil enthält eine dem Bolzen zugeordnete Ausnehmung zur Aufnahme eines erweiterten Fußteils des Bolzens. Die Spitze ist somit mittelbar über den Flanschteil mit dem Bolzen verbunden. Beim Einführen des Aufnahmeelements in eine Bohrung eines Bauteils wird die aus Metall bestehende Spitze erheblichen Beanspruchungen ausgesetzt, und erst nach vollständiger Zentrierung gelangt die Außenfläche des Bolzens mit der Bohrung des Bauteils in Eingriff.

Ferner ist aus der WO 2004/069 468 A1 ein Aufnahmeelement mit einem Bolzen bekannt, welcher im Bereich seiner zu einer Längsachse im wesentlichen parallelen Außenfläche wenigstens zwei Ausnehmungen mit Öffnungen aufweist. In diesen Ausnehmungen sind aus verschleißfestem Werkstoff bestehende oder solchen enthaltende Stifte angeordnet, welche durch die genannten Öffnungen teilweise radial durchgreifen und über die Außenfläche mit einem vorgegebenen Überstand vorstehen. Derartige Aufnahmeelemente sind in Bohrungen wenigstens eines Bauteils zur Fixierung und/oder Ausrichtung für eine nachfolgende Bearbeitung einführbar. Sollen beispielsweise zwei Blechteile durch Schweißen miteinander verbunden werden, so enthalten diese miteinander korrespondierende Aufnahmebohrungen, in welche nachfolgend ein Aufnahmeelement der genannten Art zum Zentrieren und Aufnehmen der Blechteile eingeführt wird. Insbesondere bei großformatigen Bauteilen werden zweckmäßig mehrere derartige Aufnahmeelemente als Fertigungs- oder Montagehilfsmittel vorgesehen. Die Aufnahmeelemente können auch als Haltestifte und/oder Führungsstifte in Maschinen, Anlagen oder Bearbeitungssystemen von Bauteilen zum Einsatz gelangen, wobei hier beispielshaft auf Schweißautomaten, Stanzmaschinen oder Pressen verwiesen sei. Die Fertigung des vorbekannten Aufnahmeelements erfordert einen gewissen Aufwand, da zunächst in den regelmäßig aus Metall bestehenden Bolzen zunächst die wenigstens zwei seitlichen Öffnungen eingebracht werden müssen, nachfolgend die wenigstens zwei aus Sinterwerkstoff bestehenden oder solchen enthaltenden Stifte in die Öffnungen eingebracht werden müssen, wobei in zweckmäßiger Weise in einem weiteren Bearbeitungsschritt die nach außen aus dem Bolzen überstehenden Stifte derart bearbeitet werden, dass die am weitesten radial überstehenden Flächenbereiche der Stifte auf einer gemeinsamen Mantelfläche liegen. Auch ohne Durchführung des letztgenannten Verfahrensschritts erfordert bereits die Einbringung von wenigstens zwei Öffnungen in den Bolzen und die Vorbereitung und das Einsetzen der beiden genannten Stifte einen nicht unerheblichen Fertigungsaufwand.

Des Weiteren ist aus der JP 02 290 696 A ein Aufnahmeelement bekannt, welches einen aus einem Sinterwerkstoff bestehenden Ring aufweist, durch welchen ein mit einer Spitze versehener Bolzen durchgreift. Das der Spitze abgewandte Ende des Bolzens ist mit einem Gewinde versehen, welches in eine Gewindebohrung eines mit einem Außengewinde versehenen Elements eingreift, wobei die genannte Hülse axial zwischen der Bolzenspitze und dem Element eingespannt ist. Die Herstellung der zylindrischen Hülse aus Sinterwerkstoff erfordert einen recht hohen Aufwand, um einerseits ein radiales Spiel bezüglich des durchgreifenden Bolzens zu vermeiden oder andererseits eine unerwünschte radiale Verpressung und damit verbundenen Ausschuss bei der Fertigung zu vermeiden. Zudem besteht auch dieses Aufnahmeelement aus wenigstens drei Teilen, nämlich Hülse und Bolzen und Gewindeelement, welches ein Außengewinde aufweist, wobei die unterschiedlichen Bearbeitungsschritte vor allem bei einer Serienfertigung in hohen Stückzahlen sich als nachteilig erweisen.

Hiervon ausgehend liegt der Erfindung die Aufgabe zugrunde, bei Vermeidung der aufgezeigten Nachteile das Aufnahmeelement mit einem geringen konstruktiven Aufwand dahingehend weiterzubilden, dass eine hohe Formbeständigkeit und Positionierungsgenauigkeit für eine lange Lebensdauer sichergestellt wird. Die Herstellung des Aufnahmeelements soll einen geringen Aufwand und/oder Materialverbrauch erfordern und in wirtschaftlicher Weise durchführbar sein. Des Weiteren soll problemlos die bei Verwendung oder Einsatz des Aufnahmeelements zur Herstellung einer Schweißverbindung, insbesondere von Blechteilen und/oder eines Blechteils mit Gewindemuttern, zuverlässig eine elektrische Isolierung sichergestellt sein. Ferner sollen die Aufnahmeelemente vor allem in Schweißanlagen oder -geräten, insbesondere zur Herstellung von Preßschweißverbindungen, zur Verwendung gelangen.

Die Lösung dieser Aufgabe erfolgt gemäß der im Patentanspruch 1 angegebenen Merkmalen.

Das vorgeschlagene Aufnahmeelement zeichnet sich durch einen einfachen und funktionsgerechten Aufbau aus. Der Bolzen besteht aus verschleißfesten Sinterwerkstoffen, vorzugsweise Oxidkeramik oder Nicht-Oxidkeramik, insbesondere Al2O3, ZrO2 bzw. Si3N4, oder sich daraus ergebenden Mischungen, und enthält am vorderen Ende eine Ausnehmung, in welche die aus Metall, insbesondere Stahl oder Edelstahl, bestehende Spitze mit einem Endteil eingreift und befestigt ist. Im Inneren des Bolzens ist eine direkte bzw. unmittelbare Verbindung zwischen der Spitze über deren Endteil und der insbesondere als Sackloch ausgebildeten Ausnehmung und somit dem Bolzen vorgesehen. Die bevorzugt koaxial zur Längsachse und/oder von dieser durchdrungene Ausnehmung ermöglicht in dem axial vergleichsweise kurzen Vorderbereich des Bolzen eine dauerhafte und belastbare Verbindung, ohne dass über die gesamte axiale Länge eine Querschnittsminderung des Bolzens aus der verwendeten Hochleistungskeramik bzw. dem Sinterwerkstoff erforderlich ist. Der innen liegende vordere Verbindungsbereich erstreckt sich nur über einen Bruchteil, vorteilhaft kleiner als 50%, bevorzugt kleiner als 30% der Gesamtlänge des Bolzens. Der Endteil der Spitze und/oder der vordere Verbindungsbereich besitzen eine axiale Länge, die wesentlich kleiner ist als die Gesamtlänge des Bolzens. Ferner ist von besonderer Bedeutung, dass der innen liegende Verbindungsbereich vor einem Angriff eines Mediums der Umgebung, beispielsweise Dampf oder aggresiven Gasen, zuverlässig geschützt ist. Die Befestigung der Spitze bzw. deren Endteil in der axialen Ausnehmung des Bolzens ist insbesondere als Klebeverbindung oder Schrumpfverbindung oder Einpreßverbindung oder Klemmverbindung ausgebildet. Durch mechanische Bearbeitung, insbesondere Rundschleifen, ist die Außenfläche des aus Sinterwerkstoff und/oder Hochleistungskeramik ausgebildeten Bolzens auf den jeweils erforderlichen Lochdurchmesser des zu bearbeitenden Bauteils, insbesondere Bleches oder Gewindemutter, geschliffen.

Im Gegensatz zu Aufnahmeelementen mit Spitzen aus Keramik, welche vor allem bei kleinen Durchmessern relativ leicht abbrechen können, wird durch den Einsatz der Metallspitze das sehr nachteilige Abbrechen mit hoher Funktionssicherheit unterbunden. So können erfindungsgemäß Bauteile, insbesondere Bleche, durch die Verwendung des vorgeschlagenen Aufnahmeelements vor allem in Schweißwerkzeugen und/oder Preß-Schweißwerkzeugen problemlos selbst mit recht kleinen Gewindemuttern, insbesondere mit M4, M5, M6 oder M8, Innengewinden problemlos miteinander verbunden werden, wobei Ausfall- oder Stillstandszeiten der Schweißwerkzeuge bzw. Schweißautomaten vermieden werden und lange Standzeiten erreicht werden. Der Bolzen wird insbesondere durch Trockenpressen, Strangpressen, Extrudieren oder im Spritzgußverfahren gefertigt und/oder einer mechanischen Bearbeitung unterzogen. Der Bolzen ist in vorteilhafter Weise als Teileinsatz, sei es als Rohr oder Vollstab, ausgebildet und mit der Metallspitze am vorderen freien Ende versehen und/oder ausgerüstet.

Des Weiteren kann insbesondere zur Optimierung der Isolierung, am anderen Ende des Bolzens ein Befestigungskörper aus einem Isolierwerkstoff, insbesondere Kunststoff, vorgesehen sein, wobei bevorzugt eine Klebeverbindung, Schrumpfverbindung, Preßverbindung oder Klemmverbindung vorgesehen ist. Durch den Einsatz von Hochleistungskeramik des Bolzens in Verbund mit der Spitze aus Metall, insbesondere Stahl, und wahlweise am anderen Ende die Anordnung des Befestigungskörpers aus Isolierwerkstoff zeichnet sich das erfindungsgemäße Aufnahmeelement vor allem durch die nachfolgenden verbesserten Eigenschaften aus, nämlich hohe Verschleißfestigkeit und/oder extrem lange Lebensdauer und/oder gute Formbeständigkeit und/oder exakte Positioniergenauigkeit und/oder hohe Oberflächengüte und/oder eine optimierte elektrische Isolierung.

Besondere Weiterbildungen und Ausgestaltungen der Erfindung sind in den Unteransprüchen sowie der folgenden Beschreibung besonderer Ausführungsbeispiele angegeben.

Die Erfindung wird nachfolgend anhand der in der Zeichnung dargestellten Ausführungsbeispiele näher erläutert, ohne dass insoweit eine Beschränkung erfolgt. Es zeigen:
- Fig. 1: schematisch einen axialen Schnitt eines ersten Ausführungsbeispiels,
- Fig. 2: einen axialen Schnitt eines weiteren Ausführungsbeispiels mit einem Befestigungskörper aus einem Isolierwerkstoff zwecks zusätzlicher Isolierung.

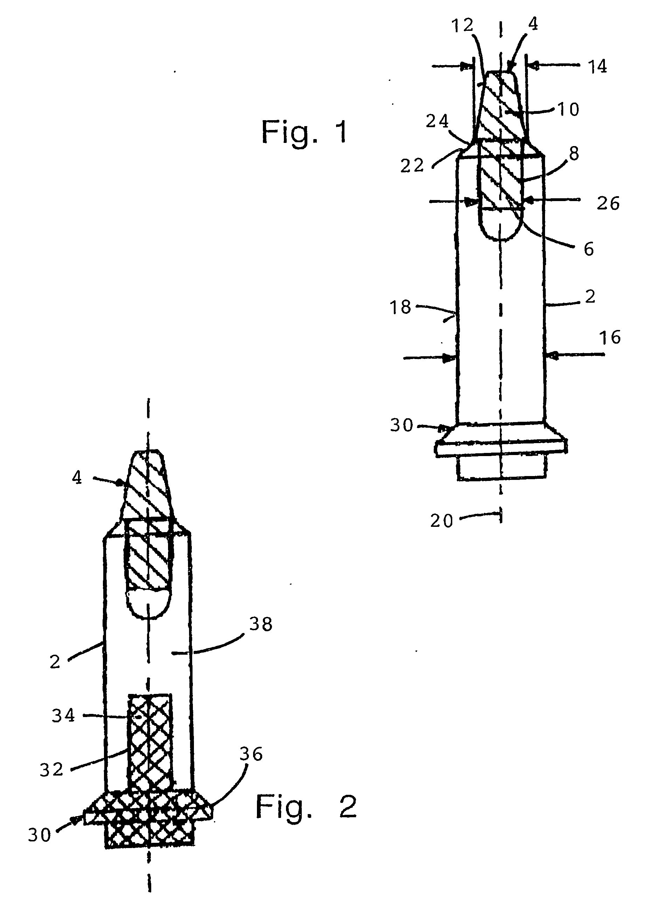

Gemäß Fig. 1 enthält das Aufnahmeelement einen Bolzen 2 und eine als separater Bauteil gefertigte Spitze 4, welche mit einem Endteil 6 in eine Ausnehmung 8 des Bolzens 2 an dessen vorderen Ende eingreift. Der Bolzen 2 besteht aus oder enthält verschleißfesten Sinterwerkstoff, vorzugsweise Oxidkeramik, wie insbesondere Al2O3 oder ZrO2, oder Nicht-Oxidkeramik, wie Si3N4, oder sich daraus ergebende Mischungen. Der Stift 4 ragt mit seinem Vorderteil 10 aus dem Bolzen 2 heraus und besitzt eine zumindest näherungsweise und/oder im wesentlichen konische Außenfläche 12. Die Spitze 4 bzw. deren Vorderteil 10 besitzt im Austrittsbereich aus dem Bolzen 2 einen maximalen Außendurchmesser 14, welcher um einen vorgegebenen Betrag kleiner ist als der Außendurchmesser 16 des Bolzens 2 bzw. dessen Außenfläche 18. Die Ausnehmung 8 im vorderen Ende des Bolzens 2 ist bevorzugt als Sackloch ausgebildet und der Endteil 6 erstreckt sich axial nur über einen Bruchteil der Gesamtlänge des Bolzens 2.

Die Außenfläche 18 verläuft im wesentlichen parallel zur Längsachse 20 des Bolzens bzw. des gesamten Aufnahmeelements und ist insbesondere als zur Längsachse 20 koaxiale zylindrische Außenfläche ausgebildet. Alternativ kann die Außenfläche 18 eine polygonale Außenkontur aufweise. Wie ersichtlich, ist zwischen dem vorderen, insbesondere konischen, Vorderteil 10 und der Außenfläche 18 des Bolzens 2 ein sich zum Vorderteil 10 verjüngender Übergangsbereich 22 vorhanden. Dieser Übergangsbereich ist zweckmäßig Bestandteil des Bolzens 2, doch kann der Übergangsbereich 22 alternativ auch Bestandteil der Spitze 4 sein. Das Aufnahmeelement besitzt erfindungsgemäß eine gestufte Außenkontur mit dem aus dem Bolzen herausragenden Vorderteil der Spitze, wobei der maximale Außendurchmesser 14 wesentlich kleiner ist als der Bolzen-Außendurchmesser 16. Der Übergangsbereich 22 besitzt eine wesentlich kleinere axiale Erstreckung als der Endteil 6. Des Weiteren ist der Öffnungswinkel bzw. Konuswinkel des Übergangsbereichs 22 in bevorzugter Weise wesentlich größer als der Öffnungs- bzw. Konuswinkel des Endteils 6.

Aufgrund des gegenüber dem Außendurchmesser 16 des Bolzens 2 erheblich kleineren Außendurchmessers 14 des Endteils 6 und/oder des erfindungsgemäß vorgesehenen Übergangsbereichs 22, wird eine sichere Einführung des Aufnahmeelements in eine zugeordnete Bohrung der mittels des Aufnahmeelements insbesondere zu zentrierenden Bauteile, insbesondere Blech und Gewindemutter, gewährleistet. Die Spitze 4 besteht aus Metall, insbesondere Stahl bzw. Edelstahl, so dass selbst bei recht kleinen Außendurchmessern des Aufnahmeelements bzw. des Bolzens 2 eine Beschädigung oder ein Abbrechen der Spitze 4 vermieden und/oder eine lange Lebensdauer bzw. Standzeit des Aufnahmeelements erreicht wird.

Die direkte Verbindung der Spitze 4 bzw. deren Endteil 6 in der korrespondierend ausgebildeten Ausnehmung 8 ist insbesondere als eine Klebeverbindung, Schrumpfverbindung, Preßverbindung oder Klemmverbindung ausgebildet. Vorteilhaft liegt die Ausnehmung 8 koaxial zur Längsachse 20. Zur exakten axialen Positionierung der Spitze 4 im Bolzen 2 ist zwischen dem axial herausstehenden Vorderteil 4 und dem in der Ausnehmung 8 angeordneten Endteil 6 eine Stufe 24 derart vorhanden, dass der maximale Außendurchmesser 14 des Vorderteils 10 um einen vorgegebenen Bertrag größer ist als der Außendurchmesser 26 des Endteils 6. Die Stufe 24 bildet somit einen definierten Anschlag, insbesondere beim Einsetzen und/oder beim Herstellen der Verbindung zwischen dem Bolzen 2 und der Spitze 4, wodurch eine exakte axiale Positionierung und letztendlich eine definierte axiale Länge des gesamten Aufnahmeelements vorgegeben ist. Des Weiteren wird mittels der Stufe 24 eine unzulässig hohe Belastung oder gar Zerstörung der Verbindung zwischen der Spitze 4 und dem Bolzen 2 vermieden.

Der Bolzen 2 enthält an seinem der Spitze 4 abgewandten Ende einen Befestigungskörper 30 zur Festlegung des Aufnahmeelements in einem Werkzeug, insbesondere Preßschweißwerkzeug. Der Befestigungskörper 30 enthält einen als radiale Erweiterung ausgebildeten Flansch zur Festlegung im Werkzeug. Es sei an dieser Stelle festgehalten, dass das Aufnahmeelement bevorzugt als Zentrierstift oder Aufnahmestift ausgebildet ist und zum Zentrieren und Aufnehmen von Bauteilen, insbesondere von mehreren Blechteilen oder wenigstens einem Blechteil mit einer Gewindemutter zur Verwendung gelangt. Ferner ist das Aufnahmeelement vor allem für den Einsatz bzw. die Verwendung in Schweißwerkzeugen, insbesondere Preßschweißwerkzeugen bzw. Vorrichtungen oder Maschinen vorgesehen. Des Weiteren zeichnet sich das erfindungsgemäße Aufnahmeelement durch kleine Außenabmessungen aus. So ist der Außendurchmesser 16 des Bolzens 2 im wesentlichen im Bereich von 3 bis 12 mm, bevorzugt von 3,5 bis 10 mm und insbesondere von 4 bis 8,5 mm, vorgegeben. Somit können bei Verwendung des erfindungsgemäßen Aufnahmeelements selbst sehr kleine Gewindemuttern mit Innendurchmessern von M4 oder M5 oder M6 oder M8 Gewinden mittels des Aufnahmeelements zentriert bzw. von diesem aufgenommen werden und in zugeordneten Maschinen oder Werkzeugen, wie insbesondere Preßschweißmaschinen, mit Blechteilen verbunden werden, wobei auch und gerade bei derart kleinen Radialabmessungen ein Abbrechen der Spitze aufgrund der vorgeschlagenen Ausbildung als Metallspitze 4 und deren Integration in den Bolzen 2 aus Hochleistungskeramik und/oder verschleißfestem Sinterwerkstoff sicher vermieden wird und letztendlich eine hohe Funktionssicherheit und/oder Lebensdauer erreicht werden.

Fig. 2 zeigt ein weiteres Ausführungsbeispiel, demgemäß der Befestigungskörper 30 kein integraler Bestandteil des Bolzens 2 ist, sondern als separater Bauteil mit dem Bolzen 2 verbunden ist. Der Befestigungskörper 30 besteht aus einem besonderen Isolierwerkstoff, wobei hier insbesondere auf Kunststoff verwiesen sei, um eine zusätzliche und/oder verbesserte Isolierung des Aufnahmeelements bezüglich des Werkzeugs, insbesondere Preßschweißwerkzeugs, sicherzustellen. Wie ersichtlich, enthält der Bolzen 2 an seinem hinteren Ende eine zweite Ausnehmung 32, in welche ein Verbindungsteil 34 des Befestigungsteils 30 eingreift. Der Verbindungsteil 34 ist in der zweiten Ausnehmung 32 mittels einer Klebeverbindung oder Schrumpfverbindung oder Preßverbindung oder Klemmverbindung verbunden. Ferner enthält der Befestigungskörper eine radiale Erweiterung und/oder einen Flansch 36, dessen Außendurchmesser größer ist als der Außendurchmesser des Bolzens 2. Zwischen dem Verbindungsteil 34 und dem Flansch 36 ist eine Stufe vorhanden, wodurch eine definierte Anlage und/oder axiale Ausrichtung des Befestigungskörpers 30 bezüglich des Bolzens 2 vorgegeben ist. Axial zwischen den beiden Ausnehmungen 8 und 32 enthält der Bolzen 2, wie auch im Ausführungsbeispiel gemäß Fig. 1, einen massiven Zwischenbereich 38, welcher eine hohe Stabilität und/oder Festigkeit des Bolzens 2 und somit des gesamten Aufnahmeelements gewährleistet.

Alternativ kann im Rahmen der Erfindung der Bolzen 2 eine einzige über die gesamte axiale Länge sich erstreckende zentrale Ausnehmung aufweisen. Für den Fall, dass entsprechend Fig. 2 ein separater Befestigungskörper 30 am hinteren Ende vorgesehen ist, besteht aber keine unmittelbare axiale Verbindung zwischen der am vorderen Ende angeordneten Spitze 4 und dem Befestigungskörper 30 und folglich werden axiale Verbindungskräfte zwischen der Spitze 4 und dem Befestigungskörper 30 in vorteilhafter Weise vermieden. Es sei hier ferner festgehalten, dass auch alternativ zur Ausführungsform gemäß Fig. 1 eine innen liegende Ausnehmung axial sich über die gesamte Länge des Bolzens einschließlich dessen integral angeformten Verbindungskörpers durchgehend erstrecken kann. Der Verbindungsbereich ist jedoch auch bei einer solchen Ausführungsform ausschließlich am vorderen Ende des Bolzens 2 vorgesehen,

### Bezugszeichen

- 2: Bolzen
- 4: Spitze
- 6: Endteil von 4
- 8: Ausnehmung in 2
- 10: Vorderteil von 4
- 12: Außenfläche von 6
- 14: maximaler Außendurchmesser von 6
- 16: Außendurchmesser von 2
- 18: Außenfläche von 2
- 20: Längsachse
- 22: Übergangsbereich
- 24: Stufe zwischen 4 und 6
- 26: Außendurchmesser von 6
- 30: Befestigungskörper
- 32: zweite Ausnehmung in 2
- 34: Verbindungsteil von 30
- 36: Flansch von 30
- 38: massiver Zwischenbereich von 2

## Patentansprüche

1. Aufnahmeelement, enthaltend einen Bolzen (2), welcher eine zu einer Längsachse (20) im wesentlichen parallele, insbesondere koaxiale Außenfläche (18) aufweist und welcher in eine Bohrung eines Bauteils, bevorzugt wenigstens zweier Bauteile, einführbar ist, wobei der Bolzen (2) aus verschleißfestem Sinterwerkstoff besteht oder solchen enthält und wobei am vorderen Ende des Bolzens (2) eine Spitze (4) aus Metall angeordnet ist, deren Endteil (6) in eine Ausnehmung (8) des Bolzens (2) eingreift und mit dem Bolzen (2) verbunden ist, **dadurch gekennzeichnet, dass** in dem am vorderen Ende des Bolzens (2) vorgesehenen Verbindungsbereich eine direkte Verbindung zwischen dem Endteil (6) und der Ausnehmung (8) besteht, wobei der innen liegende vordere Verbindungsbereich sich nur über einen Bruchteil der Gesamtlänge des Bolzens (2) erstreckt, dass zwischen dem aus dem Bolzen (2) axial herausragenden Vorderteil (10) der Spitze (4) und dem Bolzen (2) sich ein zum Vorderteil (10) verjüngender Übergangsbereich (22) vorgesehen ist, wobei das Aufnahmeelement eine gestufte Außenkontur aufweist und wobei der Vorderteil (10) einen maximalen Außendurchmesser (14) aufweist, welcher um einen vorgegebenen Betrag kleiner ist als der Außendurchmesser (16) des Bolzens (2).

2. Aufnahmeelement nach Anspruch 1, **dadurch gekennzeichnet, dass** der Endteil (6) der Spitze (4) in der Ausnehmung (8) mit dem Bolzen (2) mittels einer Klebeverbindung oder Schrumpfverbindung oder Preßverbindung oder Klemmverbindung verbunden ist und/oder dass der unmittelbare Verbindungsbereich zwischen dem Endteil (6) und der Ausnehmung (8) sich axial nur über einen Bruchteil der Gesamtlänge des Bolzens (2) erstreckt.

3. Aufnahmeelement nach Anspruch 1 oder 2, **dadurch gekennzeichnet, dass** der in die Ausnehmung (8) eingreifende Endteil (6) einen Außendurchmesser (26) aufweist, welcher um einen vorgegebenen Betrag kleiner ist als der maximale Außendurchmesser (14) des Vorderteils (10) und/oder dass zwischen dem Vorderteil (10) und dem Endteil (6) der Spitze (4) eine Stufe (24) vorgesehen ist, welche als axialer Anschlag bezüglich des Bolzens (2) ausgebildet ist.

4. Aufnahmeelement nach einem der Ansprüche 1 bis 3, **dadurch gekennzeichnet, dass** der Vorderteil (10) eine sich zum freien Ende im wesentlichen konisch verjüngende Außenfläche (12) mit einem vorgegebenen Öffnungswinkel aufweist und/oder dass die Außenfläche des Übergangsbereichs (22) einen Öffnungswinkel aufweist, welcher wesentlich größer ist als der Öffnungswinkel des Vorderteils (10).

5. Aufnahmeelement nach einem der Ansprüche 1 bis 4, **dadurch gekennzeichnet, dass** der Außendurchmesser des Bolzens (2) im Bereich von 3 bis 12 mm, bevorzugt von 3,5 bis 10 mm und insbesondere von 4 bis 8,5 mm, vorgegeben ist.

6. Aufnahmeelement nach einem der Ansprüche 1 bis 5, **dadurch gekennzeichnet, dass** der Bolzen (2) an seinem anderen Ende einen Befestigungskörper (30) aufweist, welcher integraler Bestandteil des Bolzens (2) ist und aus dem gleichen Werkstoff wie dieser besteht oder welcher alternativ als separater und aus einem Isolierwerkstoff bestehender Befestigungskörper ausgebildet ist.

7. Aufnahmeelement nach Anspruch 6, **dadurch gekennzeichnet, dass** der Befestigungskörper (30) einen Flansch (36) aufweist, dessen Außendurchmesser größer als der Außendurchmesser (16) des Bolzens (2) im übrigen ist.

8. Aufnahmeelement nach Anspruch 6 oder 7, **dadurch gekennzeichnet, dass** der Befestigungskörper (30) einen Verbindungsteil (34) aufweist, welcher in eine zweite Ausnehmung (32) des Bolzens (2) eingreift und/oder dass der Verbindungsteil (34) mit dem Bolzen (2) direkt mittels einer Klebeverbindung oder einer Schrumpfverbindung oder einer Preßverbindung oder einer Klemmverbindung verbunden ist.

9. Aufnahmeelement nach einem der Ansprüche 1 bis 8, **gekennzeichnet durch** die Verwendung in einem Schweißwerkzeug und/oder einer Schweißvorrichtung, insbesondere einem Pressschweißwerkzeug.

## Claims

1. Receiving element comprising a bolt (2) having an exterior surface (18) which is substantially parallel, in particular coaxial, to a longitudinal axis (20) and which can be inserted into a hole of a component, preferably at least of two components, the bolt (2) being made of wear-resistant sintered material or containing material of this type, there being arranged on the leading end of the bolt (2) a metal tip (4), the end portion (6) of which engages in a recess (8) of the bolt (2) and is connected to the bolt (2), **characterised in that** there is a direct connection between the end portion (6) and the recess (8) in the connection region provided at the leading end of the bolt (2), the inner leading connection region extending over only a portion of the entire length of the bolt (2), **in that**, between the leading portion (10), which projects axially from the bolt (2), of the tip (4) and the bolt (2), there is provided a transition region (22) narrowing towards the leading portion (10), the receiving element having a stepped exterior contour and the leading portion (10) having a maximum external diameter (14) which is smaller by a predetermined amount than the external diameter (16) of the bolt (2).

2. Receiving element according to claim 1, **characterised in that** the end portion (6) of the tip (4) in the recess (8) is connected to the bolt (2) by an adhesive connection or a shrink fit or a pressure fit or a clamp connection and/or **in that** the direct connection region between the end portion (6) and the recess (8) extends axially over only a portion of the entire length of the bolt (2).

3. Receiving element according to either claim 1 or claim 2, **characterised in that** the end portion (6) engaging in the recess (8) has an external diameter (26) which is smaller by a predetermined amount than the maximum external diameter (14) of the leading portion (10) and/or **in that**, between the leading portion (10) and the end portion (6) of the tip (4), there is provided a step (24) configured as an axial stop with respect to the bolt (2).

4. Receiving element according to any one of claims 1 to 3, **characterised in that** the front portion (10) has an exterior surface (12) narrowing substantially conically towards the free end with a predetermined apex angle and/or **in that** the exterior surface of the transition region (22) has an apex angle which is substantially greater than the apex angle of the leading portion (10).

5. Receiving element according to any one of claims 1 to 4, **characterised in that** the external diameter of the bolt (2) is predetermined in a range of from 3 to 12 mm, preferably of from 3.5 to 10 mm, and in particular of from 4 to 8.5 mm.

6. Receiving element according to any one of claims 1 to 5, **characterised in that** the bolt (2) has, at the other end thereof, a fastening body (30) which is an integral component of the bolt (2) and is made of the same material as said bolt or is alternatively configured as a separate fastening body made of an insulating material.

7. Receiving element according to claim 6, **characterised in that** the fastening body (30) comprises a flange (36), the external diameter of which is moreover greater than the external diameter (16) of the bolt (2).

8. Receiving element according to either claim 6 or claim 7, **characterised in that** the fastening body (30) comprises a connecting portion (34) which engages in a second recess (32) of the bolt (2) and/or **in that** the connecting portion (34) is directly connected to the bolt (2) by an adhesive connection or a shrink fit or a pressure fit or a clamp connection.

9. Receiving element according to any one of claims 1 to 8, **characterised by** use in a welding tool and/or in a welding device, in particular a pressure welding tool.

## Revendications

1. Élément récepteur, comprenant un goujon (2) qui présente une surface extérieure sensiblement parallèle, et en particulier coaxiale, à un axe longitudinal (20), et qui peut être introduit dans un perçage d'une pièce, et de manière préférée d'au moins deux pièces, le goujon (2) étant constitué d'un matériau fritté résistant à l'usure ou contenant un tel matériau et une pointe en métal (4) étant placée à l'extrémité antérieure du goujon (2), pointe dont la partie terminale (6) s'engage dans un évidement (8) du goujon et est reliée au goujon (2),
***caractérisé en ce que*,** dans la partie de jonction prévue à l'extrémité antérieure du goujon (2), il existe une liaison directe entre la partie terminale (6) et l'évidement (8), la zone de jonction antérieure située à l'intérieur ne s'étendant que sur une fraction de la longueur totale du goujon (2), ***en ce qu***'entre la partie antérieure (10) de la pointe (4) sortant axialement du goujon (2) et le goujon (2) est prévue une zone de transition (22) s'effilant en direction de la partie antérieure (10), l'élément récepteur présentant un contour extérieur étagé et la partie antérieure (10) présentant un diamètre extérieur maximal (14) qui est inférieur d'une quantité prédéterminée au diamètre extérieur (16) du goujon (2).

2. Élément récepteur selon la revendication 1, ***caractérisé en ce que*** la partie terminale (6) de la pointe (4) est reliée dans l'évidement (8) au goujon (2) au moyen d'un collage ou d'un sertissage ou d'un pressage ou d'un serrage, et/ou ***en ce que*** la zone de jonction directe entre la partie terminale (6) et l'évidement (8) ne s'étend axialement que sur une fraction de la longueur totale du goujon (2).

3. Élément récepteur selon la revendication 1 ou 2, ***caractérisé en ce que*** la partie terminale (6) s'engageant dans l'évidement (8) présente un diamètre extérieur (26) qui est inférieur d'une quantité prédéterminée au diamètre extérieur maximal (14) de la partie antérieure (10) et/ou ***en ce qu***'entre la partie antérieure (10) et la partie terminale (6) de la pointe (4) est prévu un gradin (24) qui est conformé en butée axiale par rapport au goujon (2).

4. Élément récepteur selon l'une quelconque des revendications 1 à 3, ***caractérisé en ce que*** la partie antérieure (10) présente une surface extérieure (12) s'effilant sensiblement de manière conique avec un angle d'ouverture prédéterminé et/ou ***en ce que*** la surface extérieure de la zone de transition (22) présente un angle d'ouverture qui est nettement plus grand que l'angle d'ouverture de la partie antérieure (10).

5. Élément récepteur selon l'une quelconque des revendications 1 à 4, ***caractérisé en ce que*** le diamètre extérieur du goujon (2) est imposé dans la fourchette de 3 à 12 mm, de préférence de 3,5 à 10 mm, et en particulier de 4 à 8,5 mm.

6. Élément récepteur selon l'une quelconque des revendications 1 à 5, ***caractérisé en ce que*** le goujon (2) comprend à son autre extrémité un corps de fixation (30) qui fait partie intégrale du goujon (2) et qui est constitué du même matériau que celui-ci ou qui, en variante, est réalisé sous forme de corps de fixation séparé et constitué d'un matériau isolant.

7. Élément récepteur selon la revendication 6, ***caractérisé en ce que*** le corps de fixation (30) comprend une bride (35) dont le diamètre extérieur est plus grand que le diamètre extérieur (16) du goujon (2) par ailleurs.

8. Élément récepteur selon la revendication 6 ou 7, ***caractérisé en ce que*** le corps de fixation (30) comprend une partie de jonction (34) qui s'engage dans un deuxième évidement (32) du goujon (2) et/ou ***en ce que*** la partie de jonction (34) est reliée au goujon (2) directement au moyen d'un collage ou d'un sertissage ou d'un pressage ou d'un serrage.

9. Élément récepteur selon l'une quelconque des revendications 1 à 8, ***caractérisé par*** son utilisation dans un outil de soudage et/ou un dispositif de soudage, en particulier un outil de soudage par pression.
